# EUROPÄISCHE PATENTSCHRIFT

(11) **EP 1 085 298 B1**
(45) Veröffentlichungstag und Bekanntmachung des Hinweises auf die Patenterteilung: **04.10.2006**
(21) Anmeldenummer: 00117870.6
(22) Anmeldetag: 19.08.2000
(51) Int. Cl.: G01C 21/36, G08G 1/0968

(54) **Verfahren zur Anzeige von Primär-und Sekundärinformationen**
Method for displaying primary and secondary information
Méthode pour afficher de l'information primaire et secondaire

(30) Priorität: 14.09.1999 DE 19944067
(43) Veröffentlichungstag der Anmeldung: 21.03.2001
(73) Patentinhaber: SIEMENS AKTIENGESELLSCHAFT, 80333 München (DE)
(72) Erfinder: Völkel, Andreas, 35619 Braunfels (DE)

(56) Entgegenhaltungen:
- EP-A- 0 875 729
- EP-A- 1 069 406
- DE-A- 19 531 822
- PATENT ABSTRACTS OF JAPAN vol. 1998, no. 01, 30. Januar 1998 (1998-01-30) -& JP 09 251552 A (SHARP CORP), 22. September 1997 (1997-09-22) -& US 5 990 898 A (SHARP KABUSHIKI KAISHA) 23. November 1999 (1999-11-23)

## Beschreibung

Die Erfindung betrifft ein Verfahren zur Anzeige von Primär- und Sekundärinformationen in einem Kraftfahrzeug durch Wiedergabe von Symbolen auf einem Display nach dem Oberbegriff des Anspruchs 1.

Bei prädikativen Hinweisen nimmt meist durch den Zeitverlauf oder bei der Fahrzeugnavigation durch die zurückgelegte Fahrstrecke die Bedeutung des Hinweises zunächst zu. Wenn beispielsweise bei einer Fahrzeugnavigation darauf hingewiesen werden soll, dass bei der übernächsten Abfahrt die Autobahn zu verlassen ist, dann hat dieser Hinweis für den Fahrer zunächst geringe Bedeutung, so dass er ihn nicht zwingend wahrnehmen muss. Spätestens dann, wenn man zum Abbiegen den Blinker setzen und sich rechts einordnen muss, wird der ursprünglich sekundäre Hinweis zu einer Primärinformation, die nicht übersehen werden darf.

Bei den bisher gebräuchlichen Fahrzeugnavigationseinrichtungen wird nicht zwischen Primär- und Sekundärinformationen unterschieden. Es ist jedoch bei Warnhinweisen und Überwachungsanzeigen im Kraftfahrzeug üblich, Anzeigen für Sekundärinformationen weiter entfernt vom unmittelbaren Blickbereich des Fahrers anzuordnen als die Anzeigen für Primärinformationen. Weiterhin ist es üblich, Primärinformationen durch eine auffällige Farbgebung oder größere Helligkeit gegenüber den Sekundärinformationen hervorzuheben.

Aus der JP 09 25 1552 A ist ein Verfahren zur Anzeige von Symbolen bekannt, bei dem ein Symbol durch zunehmende Helligkeit eingeblendet wird. Aus der EP-A-1069406, DE 195 31 822 A und EP-A-0875729 sind jeweils Verfahren zur Anzeige von Symbolen bekannt, bei denen einzelne Symbole unterschiedliche Helligkeit aufweisen.

Der Erfindung liegt das Problem zugrunde, ein Verfahren der eingangs genannten Art so zu gestalten, dass für den Fahrer die Priorität einer Information durch die Art der Darstellung deutlich erkennbar ist.

Dieses Problem wird erfindungsgemäß durch ein Verfahren mit den Merkmalen des Anspruchs 1 gelöst.

Bei einem solchen Anzeigeverfahren erkennt man aufgrund der Auffälligkeit einer Anzeige, welche Wichtigkeit diese gerade hat. Weiterhin erkennt man durch die Veränderung der Helligkeit der Anzeige, ob die Information an Bedeutung gewinnt oder an Bedeutung verliert. Da gemäß dem Verfahren nach der Erfindung Sekundärinformationen so lange relativ unauffällig angezeigt werden, wie sie tatsächlich Sekundärinformationen sind, wird ein Fahrer durch solche Informationen weniger abgelenkt als bei den bisherigen Anzeigeverfahren. Das erfindungsgemäße Verfahren eignet sich ganz besonders für Fahrzeugnavigationssysteme, weil dadurch Abbiegehinweise so lange relativ unauffällig gegeben werden können, wie sie noch nicht dringlich sind.

Weiterhin ist vorgesehen, dass die Sekundärinformation zunächst mit geringer Helligkeit, nach Eintreten einer hohen Bedeutung mit bis zur Helligkeit der Primärinformation zunehmender und anschließend bei Entwicklung der Sekundärinformation zur Primärinformation mit konstanter Helligkeit eingeblendet wird und dass die dann zur Sekundärinformation gewordene ursprüngliche Primärinformation durch abnehmende Helligkeit ausgeblendet wird.

Zusätzlich zur Veränderung der Helligkeit einer Anzeige kann man ihre Bedeutung auch dadurch hervorheben, dass gemäß einer vorteilhaften Weiterbildung des erfindungsgemäßen Verfahrens mit zunehmender Bedeutung einer Sekundärinformation diese näher zur Primärinformation visualisiert wird.

Das erfindungsgemäße Verfahren lässt verschiedene Abwandlungen zu. Zur weiteren Verdeutlichung seines Grundprinzips ist in der Zeichnung ein Ausführungsbeispiel dargestellt und wird nachfolgend beschrieben. Die Zeichnung zeigt in
- Fig.1: eine Anzeigefolge eines Fahrzeugnavigationssystems,
- Fig.2: den Helligkeitsverlauf der Anzeigefolge gemäß der Fig.1.

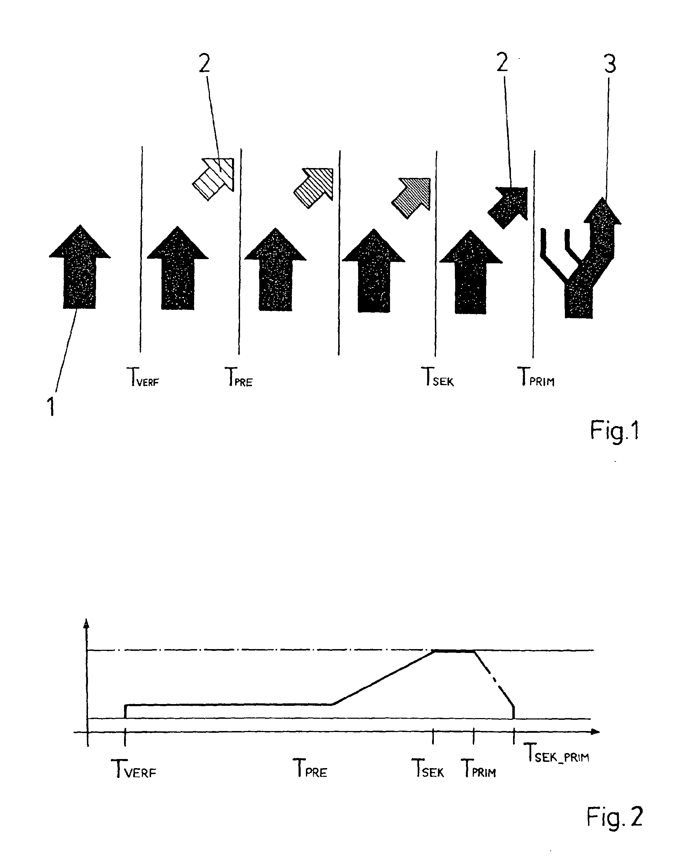

Auf der in Figur 1 gezeigten Folge von Anzeigen erkennt man zunächst als Primärinformation einen deutlich sichtbaren, geradeaus weisenden Pfeil 1. Zu einem Zeitpunkt T_{verf} erscheint auf der Anzeige ein schwach sichtbarer, schräg nach rechts weisender Pfeil 2, der den Fahrer informiert, dass bald nach rechts abzubiegen ist. Dieser Hinweis beginnt ab T_{Pre} relevant zu werden und nimmt deshalb an Helligkeit zu. Zum Zeitpunkt Tₛₑₖ hat der schräge Pfeil 2 seine volle Relevanz und deshalb zugleich seine volle Helligkeit erreicht, d.h. der Fahrer muss bei nächster Gelegenheit nach rechts abbiegen. Bei der ganz rechts in Figur 1 wiedergegebenen Anzeige sind der schräge Pfeil 2 und der gerade Pfeil 1 verschwunden. Statt dessen erfolgt als Primärinformation eine neue Anzeige in Form eines zweimal abgeknickten Pfeils 3.

Die Figur 2 verdeutlicht, dass der Pfeil 2 zunächst mit geringer Helligkeit erscheint, zum Zeitpunkt T_{Pre} jedoch an Helligkeit zunimmt, bis der Zeitpunkt T_{Sek} erreicht ist. Vom Zeitpunkt T_{Sek} fällt diese Helligkeit wieder ab, bis die Anzeige gänzlich verschwindet.

## Patentansprüche

1. Verfahren zur Anzeige von Primär- und Sekundärinformationen in einem Kraftfahrzeug durch Wiedergabe von Symbolen auf einem Display, wobei die Symbole entsprechend ihrer Bedeutung unterschiedlich hell eingeblendet werden und ihre Helligkeit mit sich verändernder Bedeutung der Information verändert wird und gleichzeitig eine Primärinformation und eine Sekundärinformation angezeigt werden, **dadurch gekennzeichnet, dass** die Sekundärinformation einen Abbiegehinweis betrifft und dass die Sekundärinformation zunächst mit geringer Helligkeit, nach Eintreten einer hohen Bedeutung mit bis zur Helligkeit der Primärinformation zunehmender und anschließend bei Entwicklung der Sekundärinformation zur Primärinformation mit konstanter Helligkeit eingeblendet wird und dass die dann zur Sekundärinformation gewordene ursprüngliche Primärinformation durch abnehmende Helligkeit ausgeblendet wird.

2. Verfahren nach Anspruch 1, **dadurch gekennzeichnet, dass** mit zunehmender Bedeutung einer Sekundärinformation diese näher zur Primärinformation visualisiert wird.

## Claims

1. Method for displaying primary and secondary information in a motor vehicle by reproducing symbols on a display, the symbols being shown with different brightnesses according to their importance, and their brightness being changed as the importance of the information changes, and primary information and secondary information being displayed at the same time, **characterized in that** the secondary information relates to a turnoff instruction and **in that** the secondary information is first shown with low brightness, is shown with a brightness increasing up to the brightness of the primary information once a high level of importance has arisen, and is then shown with constant brightness when the secondary information develops into primary information, and **in that** the original primary information which has then turned into secondary information is faded out by means of reducing brightness.

2. Method according to Claim 1, **characterized in that**, as the importance of secondary information increases, this secondary information is visualized closer to the primary information.

## Revendications

1. Procédé permettant d'afficher des informations primaires et des informations secondaires dans un véhicule automobile en reproduisant des symboles sur un écran, où les symboles sont affichés avec une luminosité différente en fonction de leur importance et leur luminosité variant en fonction de la modification de l'importance de l'information et où, en même temps, une information primaire et une information secondaire sont affichées, **caractérisé par le fait que** l'information secondaire concerne une indication de changement de direction et que l'information secondaire est, d'abord, affichée avec une faible luminosité, puis, lorsque que son importance devient élevée, avec une luminosité augmentant jusqu'à la luminosité de l'information primaire et, ensuite, lorsque l'information secondaire devient une information primaire, avec une luminosité constante et que l'information à l'origine primaire, qui devient alors une information secondaire, est masquée en fondu en diminuant sa luminosité

2. Procédé selon la revendication 1, **caractérisé par le fait que,** lorsque l'importance d'une information secondaire augmente, celle-ci est visualisée plus près de l'information primaire.
